# EUROPEAN PATENT APPLICATION

(11) **EP 1 182 545 A2**
(43) Date of publication of application: **27.02.2002**
(21) Application number: 01305291.5
(22) Date of filing: 18.06.2001
(51) Int. Cl.: G06F 9/445

(54) **Operating system for a dynamically re-configurable PC**

(30) Priority: 16.08.2000 US 640156
(71) Applicant: Xybernaut Corporation, Fairfax, Virginia 22033 (US)
(72) Inventor: Sallam, Hussein, Clarksvile, Maryland 21029 (US)
(74) Representative: Goode, Ian Roy

(57) **Abstract**

A real time, event-driven operating system (OS) for use with a serial-based architecture computer. The OS is able to dynamically reconfigure itself in response to changes in the attached system components. At boot time, changes can be made in the basic system components such as additional processors, memory modules, hard disks, etc. and the operating system is able to reconfigure itself in response. Additionally, while the computer is in the powered state, peripheral devices can be added and removed and the OS will, in real time, or near real time, sense the absence or presence of new devices and adjust accordingly. As a result the OS is more stable and flexible than current state-of-the-art OS's.

## Description

This invention relates to a computer operating system and, more specifically, to an operating system which is capable of dynamically reconfiguring itself in response to changes in attached system level components and peripherals either at boot time or when in the powered state.

Current state-of-the-art personal computer (PC) operating systems (OS's) have developed in tandem with, and in response to, modern computer hardware. All modern PC's are based on the Von Neumann computer architecture model consisting of five major components: input unit, output unit, arithmetic logic unit (ALU), memory unit, and control unit. A refinement of the Von Neumann model is the system Bus model. This architecture has a CPU (ALU and control), memory, and an I/O unit. Communication among components is handled by a shared pathway called the parallel system Bus, which is made up of the data Bus, address Bus, and control Bus. The system Bus is integral to the computer motherboard and all system level components are wired into it via hard wired sockets. This has become the de-facto standard for PC design. Resultantly, modern day OS's have adapted to maximize functionality in this environment. The system level components are relatively fixed in these systems, thus the OS need not adjust itself in response to changes in them. Peripheral device configurations do change frequently. However, these devices are made by third party manufacturers and are made to interface with the standards dictated by the OS.

The Microsoft Windows ® family of OS's has dominated the market for the past decade. These OS's currently are proprietary, closed source code, 32 bit OS's. One of the hallmarks of Windows ® is its proclaimed "plug and play" capability whereby external peripherals can be added prior to boot and the OS will detect them and will automatically install the necessary device drivers so that they will be available to the OS. To facilitate this, a database of device drivers is maintained in the system subdirectory of the OS. However, this often requires users to have and load a diskette containing the necessary device driver software or information file which describes to the OS what the device is to be used for. Frequently conflicts arise, particularly when the devices are card based boards such as video, sound, adapter cards, etc. Each time one of these devices is added, the OS must reinstall the device driver so that it can be correctly utilized. Additionally, plug and play capability does not extend to system level components such as I/O, CPUs, memory modules, fixed disks, etc. Thus, it is not possible to interchange these components without reconfiguration by the user. However, state-of-the-art computer OS's are a direct product of the hardware platform they are designed to work with. That is to say, they perform the task they are designed to perform, but are limited by the limitations inherent in the design of modern PC's where all the system level components are attached to the same Bus and contained within a single enclosure. In this environment there is seldom a need for reconfiguration, the reason being that substantial time is involved in opening the case and removing components. Furthermore, these components are not in their own enclosures and are therefore vulnerable to electrostatic damage as well as physical damage.

It is therefore an object of this invention to provide for a computer OS which is devoid of the aforementioned limitations.

According to the present invention, there is provided a modular computer operating system comprising a CPU component and at least one other computer component of a conventional computer, each of said CPU and other component(s) being housed in its own module, or in a single enclosure, each of said CPU and other component(s) being in contact with a serial Bus controller, each said CPU and other component(s) being connected individually to said serial Bus controller by at least one separate cable per component, and said system, during each initial powered state and while in the powered state, being operable to configure said system for each specific and desired usage.

The invention provides an OS which is capable of dynamically reconfiguring itself at boot, or while it is in the powered state. The OS receives BIOS-type information from each attached system level device instructing it as to the nature of the device and protocol for interacting with said device.

The OS is optimized to work with a Bus-less or serial Bus PC architecture.

The invention provides a real time OS which is inherently stable and compatible with all attached devices and system level components.

The invention is accomplished generally by a robust OS for use with Bus-less or serial Bus architecture based PC's or other computer devices.

Recent advances in computer architecture have allowed for a more flexible design. Previously the conducting properties of the parallel Bus and the clock speed at which it operated forced all these components to be attached to a single motherboard containing the Bus. By abandoning the parallel computer Bus in favor a high speed serial Bus controller, it is possible for each system level component to be housed in its own enclosure. Communication amongst system components is facilitated by a high speed serial Bus controller in place of the traditional parallel system Bus with a single cable connecting each device to the controller. This allows for practically unlimited distances between system components, and heretofore unknown design flexibility. In order to take advantage of this new computer architecture, the OS incorporates most or all of the advantages and capabilities of state-of-the-art OS's while allowing for dynamic reconfiguration or boot configuration of system level components; that is to say, an OS which can at boot, or while in the powered state, sense which devices are attached and properly configure itself to utilize the devices.

The present invention overcomes the limitations of prior art OS's by providing a flexible, dynamically re-configurable OS for use with a Bus-less or serial Bus PC or related computer and/or communication devices. All modern computer systems are built on the system Bus architecture where the parallel Bus serves as the means of electrical interconnection for the system level components. However, serial data transmission rates have now reached 800 mbits/second and are expected to double annually. As a result, it is now possible to build a computer whose system level components are no longer tied to the physical constraints imposed by the parallel computer Bus. Nor do the components any longer need to reside in one case within close physical proximity to one another. It is possible to have a single serial Bus controller which is connected by serial cable, such as IEEE 1394 (fire wire), to each of the component devices, CPU, memory, etc, which can now with the teachings of this invention each be housed in their own enclosures if so desired. This considerably frees up the design constraints of computers and allows for infinite unique configurations. Additional CPU's, different video devices, additional memory module(s), etc., can all simply be connected in a modular fashion to the Bus controller. However, such an architecture will require each component, be it memory, CPU, or video controller, to have its own BIOS-type information or embedded firmware for communicating protocol to the OS so that it can configure itself, at system boot, to take advantage of all attached system devices and components or, on-the-fly, if and when a new component is detected or attached.

In a Bus-less computer architecture, it will be necessary for an OS to be able to configure itself "on-the-fly" with respect to its system configuration. Such an OS will take advantage of all of the major features of known OS's and add the ability to receive BIOS-type information at boot from the connected devices and components. The OS then senses the information from the BIOS or similar structure of the modular component, and is immediately able to utilize the component. If the component is a system level component, it will be fully operational at boot. If it is a third party peripheral device, such as an external zip drive, it will work in the traditional manner. The local BIOS or similar data structure of each connected device will identify itself to the OS on boot, or the OS will detect the addition of a new device through a defined protocol of announcing its arrival to the OS, thus permitting an infinite number of possible configurations at each time of boot or when in the powered state. The OS will permit the computer system to function as a real time OS, event driven computer system. The benefit of this real time kernel is that disconnecting a peripheral device when the computer is in the powered stage will not cause it to hang up or for an exception error to occur. This can be facilitated through several constructive embodiments. In one embodiment, the serial Bus controller (herein after SBC) could have a central BIOS chip or controller (herein after CBC) which receives information from the firmware or BIOS contained in all the other modules. It is important to maximize compatibility with existing products to enhance market acceptance. Thus, any end-level peripherals will plug into one of the various modules of the serial-Bus PC. Items such as monitors, speakers, external zip drives, cameras, etc, which are already ubiquitous in the market place will interface using their existing connectors. For example, the video module will contain an integral video graphics card with its own BIOS chip that, at system-boot, sends information to the CBC via the serial cable, sufficient to characterize it and to convey any necessary protocol for communicating with it. However, on the other end other end of the module will be a connector which comports with computer video output standards. The same can be said of a sound module. Internal to this module is a sound card and BIOS chip which at system boot sends information to the SBC identifying itself and the protocol for communicating with the sound card. However, the module will also possess typical sound card inputs and outputs to receive microphone in, joystick in, output to external speakers. It will be the job of the CBC to communicate to the next level, the OS, the information about each item which is attached.

In another embodiment, a portion of the OS may be embedded. This portion interrogates the SBC at system boot to detect all attached devices and hands this information to the OS as it is loaded from the hard drive into system memory. In this embodiment, the embedded portion acts as an additional layer between the full OS and the BIOS.

In yet another embodiment, the OS itself, upon a call from the hard drive at system boot, interrogates the SBC to receive the information on all attached devices sent by the individual devices themselves.

As a result, capability can be added or removed as necessary and upgrades can be made in the most cost efficient manner. Furthermore, each device will be permitted to operate at its own fastest speed subject to the limits of the serial Bus speed since it will no longer be tied to the fixed speed of the parallel Bus. This invention allows configuration of a modular distributed PC to change dynamically while preserving the functionality of the remaining configuration and preserving the functionality of the existing applications. When the OS is loaded, it detects the existing configuration against the last configurations stored in a local flash memory then automatically changes the system settings in accordance with the new configuration.

The OS itself should be at least a 32 bit OS so as to be compatible with most commercially available software packages which are designed for a 32 bit platform. The OS may be an independent newly created OS or it may be a variation of an existing OS such as Microsoft Windows ® or NT ® or a variation of the Unix or Linux OS's. If the first, the OS should incorporate the functionality of the existing OS's so that it is compatible with third party software clients. If the latter type of OS's, then it will be developed as a patch or service pack that will co-exist with the proprietary OS or it will be a separate version of the OS jointly developed with the company that makes the OS. The key feature of this OS is its ability to reconfigure itself at boot without input or configuration by the user, or when attached after boot by the device "announcing" itself and describing itself via an interrupt management scheme. The devices themselves each contain a BIOS chip integral to their enclosures. At boot, or when added to the powered system, the device submits to the SBC information sufficient to permit the OS to utilize and communicate with the device.

As a result of the disclosed invention, the OS will be inherently stable as compared to state-of-the-art OS's. This is due to abandoning the parallel system Bus architecture, to the storage of information at the device itself, rather then with the OS, and to the real-time nature of the operating system. The invention will allow for a uniform standard to be established for devices whereby drivers and individual BIOS upgrades will no longer be necessary. Also, as permanent additions are not made to the OS by the addition or removal of drivers, the OS itself will be less susceptible to corruption and conflicts.

## Claims

1. A modular computer operating system comprising a CPU component and at least one other computer component of a conventional computer, each of said CPU and other component(s) being housed in its own module, or in a single enclosure, each of said CPU and other component(s) being in contact with a serial Bus controller, each said CPU and other component(s) being connected individually to said serial Bus controller by at least one separate cable per component, and said system, during each initial powered state and while in the powered state, being operable to configure said system for each specific and desired usage.

2. The system of claim 1 including means to interrogate said serial Bus controller at boot time or when in the powered on state, to detect information on component configuration, and means to communicate said information to said operating system.

3. The system of claim 1 including means to interrogate said serial Bus controller at boot time or when in the powered on state, to detect information on computer components, and subsequently communicating said information to each individual component.

4. The system of any one of claims 1 to 3 including means to receive BIOS-type information at boot from attached system components.

5. The system of any one of claims 1 to 4 including means to permit any possible configurations at boot or when in the powered state.

6. The system of any one of claims 1 to 5 wherein said serial Bus controller has a central BIOS chip having means to receive information from firmware and BIOS contained in all other modules.

7. The system of any one of claims 1 to 6 wherein at least one of said modules has peripheral connecting means.

8. The system of any one of claims 1 to 7 wherein means are provided for communication with peripherals selected from the group consisting of monitors, speakers, external zip drives, cameras, and other common peripheral devices and mixtures thereof.

9. The system of any one of claims 1 to 8 wherein each of said components has its own module housing and its own cable connected to said serial Bus controller.

10. The system of any one of claims 1 to 9 wherein means are provided for communications with a wired or wireless network.

11. A real time operating system for a dynamically re-configurable modular computer comprising:
means for controlling a serial Bus to handle computer operations between system components;
means for detecting at boot time, or when in the powered state, all attached system level and peripheral components; and
means for constant monitoring of the serial connections to determine when peripheral devices are connected or removed.

12. A computing process which comprises providing a modular computer architecture in a system having a serial Bus configuration, loading software at boot into said system in such a manner so as to permit said system to receive BIOS-type information at least from each from each connected modular computer components, sensing information from said BIOS of the components, providing in said system a serial Bus controller having a central BIOS chip, said central BIOS chip receiving information from a BIOS contained in all other modules, and constructing thereby a serial Bus computer system.

13. The process of claim 12 including interrogating said serial Bus controller at boot time or when in the powered on state, to detect information on component configuration, and communicating said information to said operating system.

14. The process of claim 12 or claim 13 including interrogating said serial Bus controller at boot time or when in the powered on state, to detect information on computer components, and subsequently communicating said information to each individual component.

15. The process of any one of claims 12 to 14 wherein said system includes means to receive BIOS-type information at boot from attached system components.

16. The process of any one of claims 12 to 15 including means to permit any possible configurations at boot or when in the powered state.

17. The process of any one of claims 12 to 16 wherein said serial Bus controller has a central BIOS chip having means to receive information from firmware and BIOS contained in all other modules.

18. The process of any one of claims 12 to 17 wherein at least one of said modules has peripheral connecting means.

19. The process of any one of claims 12 to 18 wherein means are provided for communication with peripherals selected from the group consisting of monitors, speakers, external zip drives, cameras, and other common peripheral devices and mixtures thereof.

20. The process of any one of claims 12 to 19 wherein means are provided for communications with a wired or wireless network.
